# FASCICULE DE BREVET EUROPEEN

(11) **EP 0 797 521 B1**
(45) Date de publication et mention de la délivrance du brevet: **12.04.2000**
(21) Numéro de dépôt: 95943273.3
(22) Date de dépôt: 22.12.1995
(51) Int. Cl.: B60T 15/50

(54) **LIMITEUR DE SURCHARGE DU RESERVOIR DE COMMANDE D'UN DISTRIBUTEUR DE FREINAGE FERROVIAIRE**
ÜBERLADUNGSBEGRENZER EINES STEUERBEHÄLTERS FÜR SCHIENENFAHRZEUG-BREMSEINHEIT
RAILWAY BRAKE VALVE CONTROL RESERVOIR OVERLOAD PROTECTOR

(30) Priorité: 30.12.1994 FR 9415963
(43) Date de publication de la demande: 01.10.1997
(73) Titulaire: SAB WABCO S.A., 93270 Sevran (FR)
(72) Inventeur: GRENIER, Michel, F-77400 Pomponne (FR); LIMOZIN, Henri, F-77410 Claye-Souilly (FR); LE GALL, Gilbert, F-77500 Chelles (FR); DALLE MOLLE, Bruno, F-93290 Tremblay-en-France (FR); COMMAILLE, Daniel, F-77186 Noisiel (FR)
(74) Mandataire: Desrousseaux, Grégoire Marie
(86) Numéro de dépôt international: FR9501729
(87) Numéro de publication internationale: WO9620857

(56) Documents cités:
- CH-A- 344 441
- FR-A- 1 076 140
- FR-A- 1 113 935

## Description

La présente invention a pour objet un distributeur de freinage à fluide sous pression pour véhicule ferroviaire, comprenant
- des moyens de liaison à une conduite générale;
- des moyens de liaison à un réservoir de commande;
- des moyens de liaison à un réservoir auxiliaire;
- des moyens de liaison à des organes de freinage;
- un dispositif principal, délivrant une pression de freinage vers les moyens de liaison à des organes de freinage, en fonction de la pression dans les moyens de liaison à une conduite générale et
- un dispositif d'isolement du réservoir de commande commandant le passage de fluide depuis les moyens de liaison à une conduite générale vers les moyens de liaison à un réservoir de commande, ledit dispositif d'isolement du réservoir de commande empêchant le passage du fluide tant que la pression dans les moyens de liaison à des organes de freinage est supérieure à une valeur prédéterminée, et permettant le passage de fluide lorsque la pression dans les moyens de liaison à des organes de freinage est inférieure à cette valeur prédéterminée.

Les trains de véhicules ferroviaires comprennent une installation de freinage qui s'étend sur toute la longueur du train, et qui est commandée par les variations de la pression d'un fluide (air comprimé) dans une conduite courant le long du train et appelée conduite générale de freinage.

Les distributeurs de freinage ferroviaire montés en principe sur chacun des véhicules du train sont des dispositifs connus permettant, sous la commande des variations de pression du fluide dans la conduite générale de fournir du fluide sous pression de façon modérable au serrage et au desserrage, pour commander les organes de freinage, tels que des cylindres de frein, le cas échéant par l'intermédiaire d'un relais.

Chaque distributeur est relié non seulement aux organes de freinage (cylindres de frein) et à la conduite générale du véhicule, mais aussi à un réservoir de commande et à un réservoir auxiliaire.

Le réservoir de commande sert à fournir une pression de référence pour le serrage et le desserrage des organes de freinage. Le réservoir auxiliaire présente une capacité plus grande et fournit l'énergie nécessaire (un volume d'air comprimé) pour commander et actionner les organes de freinage.

A cet effet, un distributeur de freinage comprend un dispositif principal, dont la fonction est de délivrer une pression de freinage, en fonction de la pression de la conduite générale. La conduite générale est en temps normal sous une pression nominale. Pour provoquer le serrage des organes de freinage, on fait diminuer la pression de la conduite générale, et on la fait remonter pour provoquer le desserrage. La pression de desserrage de la conduite générale peut être supérieure à la pression nominale de la conduite générale, pour accélérer le desserrage.

Le réservoir de commande et le réservoir auxiliaire sont chargés depuis la locomotive du train, par l'intermédiaire de la conduite générale.

Il est important d'éviter que le réservoir de commande, dont la pression sert de référence, ne soit chargé à une pression trop élevée, par exemple lorsque la pression de la conduite générale dépasse la pression nominale pendant une phase de desserrage. Une telle surpression du réservoir de commande pourrait, dans un freinage ultérieur, conduire à un serrage excessif des freins et à des difficultés ultérieures de desserrage.

A cet effet, un distributeur de freinage comprend donc un dispositif d'isolement du réservoir de commande, dont le but est d'empêcher le chargement du réservoir de commande par la conduite générale tant que le desserrage n'est pas complet. Ce dispositif d'isolement du réservoir de commande permet en outre de favoriser la montée en pression dans la conduite générale, en évitant un chargement prématuré des réservoirs de commande des wagons situés en tête du train. Ce dispositif fonctionne par exemple en empêchant le chargement du réservoir de commande tant que la pression de freinage est supérieure à une valeur limite indiquant que le desserrage n'est pas terminé.

La demanderesse a constaté que ce dispositif pouvait dans certaines circonstances ne pas suffire pour empêcher une surcharge du réservoir de commande.

Ce problème peut par exemple se poser dans le cas de trains d'une grande longueur. Dans ce cas, le desserrage dans les wagons de tête peut être complet, alors que le desserrage des wagons de queue n'est pas encore terminé, ou même pour des trains très longs, n'est pas encore commencé. Il peut alors être intéressant de garder une pression de conduite générale supérieure à la pression nominale, pour terminer le desserrage, notamment en queue de train. Mais ceci conduit alors à une surcharge des réservoirs de commande des premiers wagons, et ne peut être envisagé dans les distributeurs de freinage actuels.

FR-A-1 076 140 décrit un distributeur de freinage, dont le but est d'éviter dans le réservoir auxiliaire et dans le réservoir de commande une augmentation de la pression au delà de la pression de régime, lorsque l'on applique dans la conduite principale, au desserrage des freins, une pression supérieure à la pression de régime. Ce distributeur propose de charger conjointement le réservoir auxiliaire et le réservoir de commande à travers un étranglement, dès que la pression dans le réservoir auxiliaire s'approche de la pression de régime. La solution proposée revient en fait à limiter la vitesse de charge du réservoir auxiliaire lorsque l'on approche de la pression de régime, afin d'éviter des surcharges du réservoir auxiliaire et du réservoir de commande. Elle ne s'applique que pour les dispositifs dans lesquels le réservoir auxiliaire et le réservoir de commande sont chargés conjointement.

Par ailleurs, FR-A-1113935 décrit un dispositif de protection contre les surcharges d'installations de freinage avec triple valve à l'état desserré, en particulier pour véhicules sur rails, comprenant:
a) un dispositif de surveillance intercalé dans la conduite de remplissage entre la conduite générale et la chambre de contrôle à pression constante et étranglant ou fermant la conduite de remplissage lors d'une action se produisant à l'état desserré du frein, pendant un temps limité ou pendant la durée de cette action;
b) un dispositif de contrôle interrompant le remplissage du cylindre de frein indépendamment de la pression régnant dans le réseroir d'air auxiliaire, aussitôt que l'air du cylindre de frein atteint la pression maxima prescrite, ou ralentissant ou coupant le remplissage du réservoir auxiliaire pendant la durée définie en a).

L'invention propose une solution au problème de surcharge du réservoir de commande, qui soit plus générale et plus fiable que celle proposée dans ces documents, et qui s'applique aux distributeurs modernes, dans lesquels le réservoir de commande et le réservoir auxiliaire sont chargés par des voies distinctes.

La présente invention a pour objet un distributeur du type précité comprenant:
- un passage reliant les moyens de liaison à une conduite générale aux moyens de liaison à un réservoir auxiliaire, ledit passage présentant un étranglement, et
- un limiteur de surcharge, commandant le passage du fluide depuis ledit dispositif d'isolement du réservoir de commande vers lesdits moyens de liaison à un réservoir de commande, en fonction du rapport entre la pression dans les moyens de liaison à la conduite générale et la pression dans ledit passage, entre ledit étranglement et les moyens de liaison au réservoir auxiliaire.

Selon une forme d'exécution de l'invention, la section dudit étranglement est susceptible d'être réglée.

Selon une autre forme d'exécution de l'invention, le distributeur comprend en outre un dispositif de retardement du remplissage du réservoir auxiliaire au desserrage, commandant le passage de fluide depuis les moyens de liaison à une conduite générale vers ledit passage, via un passage, en fonction du rapport entre la pression dans lesdits moyens de liaison à une conduite générale et la pression dans ledit passage, entre ledit étranglement et les moyens de liaison au réservoir auxiliaire.

Selon encore une forme d'exécution de l'invention, ledit limiteur de surcharge présente une chambre inférieure séparées en deux parties isolées par un équipage de contrôle, formant piston avec une membrane d'étanchéité, et sollicité par un ressort, les parties isolées de la chambre inférieure étant respectivement reliées aux moyens de liaison à une conduite générale et au passage, entre ledit étranglement et les moyens de liaison au réservoir auxiliaire, et l'écoulement du fluide entre ledit dispositif d'isolement du réservoir de commande et lesdits moyens de liaison à un réservoir de commande est contrôlé par le déplacement dudit équipage de contrôle.

Selon un mode de réalisation de l'invention, le distributeur comprend en outre
- une chambre supérieure, reliée d'une part audit dispositif d'isolement du réservoir de commande et d'autre part auxdits moyens de liaison à un réservoir de commande, et
- un clapet susceptible de commander le passage du fluide à travers ladite chambre supérieure,
l'équipage de contrôle présentant un poussoir qui s'engage dans la chambre supérieure et qui est susceptible de repousser en position d'ouverture ledit clapet, à l'encontre de la sollicitation d'un ressort.

Selon une forme d'exécution du distributeur selon l'invention, le siège dudit clapet est prévu dans un clapet anti-retour, disposé dans ladite chambre supérieure, et susceptible d'augmenter la section du passage depuis les moyens de liaison à un réservoir de commande vers ledit dispositif d'isolement du réservoir de commande, lorsque la pression dans lesdits moyens de liaison à un réservoir de commande est supérieure à la pression régnant dans ladite chambre supérieure.

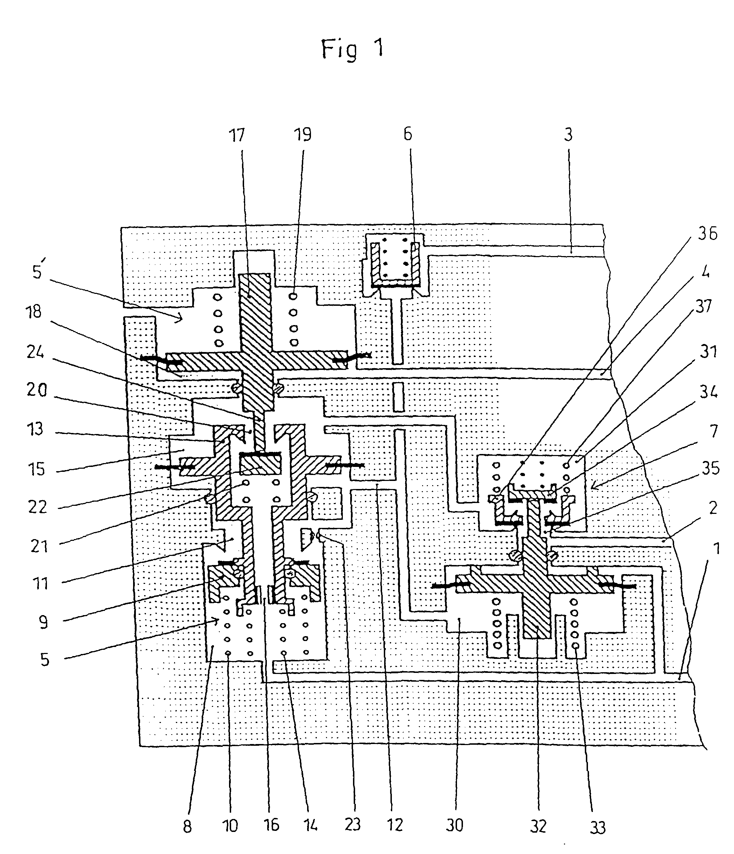

D'autres avantages et caractéristiques de l'invention apparaîtront à la lecture de la description qui suit d'un mode de réalisation de l'invention, donné à titre d'exemple et en référence aux dessins annexés, qui montrent, sur la figure 1 unique une vue schématique partielle d'un distributeur de freinage selon l'invention.

Dans toute la présente description, on mesure les pressions en utilisant comme référence la pression atmosphérique.

La figure 1 unique montre une vue schématique d'une partie d'un distributeur de freinage selon l'invention; ne sont représentés sur la figure que les parties du distributeur nécessaires à une bonne compréhension de l'invention. Les conduites 1, 2, 3 et 4 de la figure sont respectivement reliées à la conduite générale, au réservoir de commande, au réservoir auxiliaire, et à un organe de frein, tel que par exemple un cylindre de frein. La conduite 4 peut aussi être reliée non pas directement au cylindre de frein, mais par exemple à un relais à commande pneumatique, qui commande les cylindres de frein, que l'on englobe sous la dénomination générale d'organe de freinage.

On n'a pas représenté sur la figure le dispositif principal du distributeur, qui permet, comme indiqué plus haut, de délivrer une pression de freinage (conduite 4) en fonction de la pression de la conduite générale (conduite 1). La structure et le fonctionnement d'un tel dispositif principal sont connus de l'homme du métier.

Apparaissent sur la figure un dispositif de coupure, présentant un dispositif 5' d'isolement du réservoir de commande et un dispositif 5 de retardement du remplissage du réservoir auxiliaire au desserrage, ainsi qu'une soupape de retenue 6 disposée entre le dispositif de retardement 5 et le réservoir auxiliaire. Apparaît aussi sur la figure un limiteur de surcharge 7 permettant d'éviter la surcharge du réservoir de commande.

Le dispositif 5 de retardement du remplissage du réservoir auxiliaire au desserrage, noté dispositif de retardement dans la suite, présente une chambre inférieure 8, dans laquelle débouche la conduite 1 reliée à la conduite générale. Dans cette chambre inférieure est disposé un clapet coulissant 9 sollicité vers le haut par un ressort 10. Le clapet coulissant 9 lorsqu'il se déplace vers le haut vient en butée et obture un passage annulaire 11 relié via un passage de liaison 12 à la soupape de retenue 6. Lorsque le passage annulaire 11 est obturé, le passage d'air entre la chambre inférieure 8 et le passage d'alimentation 12 reste néanmoins possible via un étranglement 23. Selon un mode de réalisation de l'invention, la section de cet étranglement 23 peut être réglée en fonction de la capacité du réservoir auxiliaire.

Un équipage principal 13 est monté coulissant dans le clapet coulissant 9, par l'intermédiaire d'un joint d'étanchéité; l'équipage principal 13 est sollicité vers le haut par un ressort 14 disposé dans la chambre inférieure 8. L'équipage principal présente deux butées de part et d'autre du clapet coulissant 9; lorsque l'équipage principal descend, le clapet coulissant vient en appui sur la butée supérieure, et le passage annulaire 11 est ouvert. Sous l'action du ressort 14, le dispositif principal tend à remonter; le clapet coulissant vient alors en appui sur la butée inférieure de l'équipage principal, et est susceptible d'être entraîné vers le haut, jusqu'à venir obturer le passage annulaire 11.

La partie supérieure de l'équipage principal 13 forme avec une membrane d'étanchéité un piston qui sépare une chambre intermédiaire 15 du dispositif de retardement en deux parties isolées. La partie inférieure de la chambre 15 est reliée au passage d'alimentation 12, en aval de l'étranglement 23. L'équipage principal présente une ouverture centrale, reliant la chambre inférieure 8 à la partie supérieure de la chambre intermédiaire 15. Cette ouverture centrale est munie, dans sa partie inférieure débouchant dans la chambre inférieure 8 du dispositif de retardement, d'un premier étranglement 16. Dans sa partie supérieure, cette ouverture centrale est susceptible d'être obturée par un clapet 22, disposé dans l'équipage principal et sollicité vers le haut par un ressort 21. Sous l'action du ressort 21, le clapet 22 s'appuie sur un siège et ferme l'ouverture centrale de l'équipage principal, empêchant ainsi toute communication entre la chambre inférieure 8 et la partie supérieure de la chambre intermédiaire 15.

Le dispositif 5' d'isolement du réservoir de commande présente un équipage secondaire 17, formant avec une membrane d'étanchéité un piston, qui sépare en deux parties une chambre supérieure 18. Sur sa face supérieure, l'équipage secondaire est soumis à la force d'un ressort 19 tendant à le faire descendre. La partie supérieure de la chambre supérieure 18 est ouverte à la pression atmosphérique. La partie inférieure de la chambre supérieure 18 est reliée via la conduite 4 à l'organe de freinage commandé par le distributeur.

L'équipage secondaire présente en outre un poussoir 24 dépassant dans la chambre intermédiaire 15, et pénétrant dans l'ouverture centrale de l'équipage principal 13; un deuxième étranglement 20 est constitué par l'ouverture centrale de l'équipage principal, autour du poussoir 24. Le poussoir 24 est susceptible d'ouvrir le passage central de l'équipage principal, en décollant le clapet 22 de son siège, à l'encontre de la sollicitation du ressort 21, lorsque l'équipage secondaire 17 descend par rapport à l'équipage principal 13.

Ainsi, le dispositif d'isolement du réservoir de commande 5' permet de commander le passage de fluide depuis la conduite 1 vers la conduite 2, en empêchant le passage du fluide tant que la pression dans la conduite 4 est supérieure à une valeur prédéterminée, et en permettant le passage de fluide lorsque la pression dans la conduite 4 est inférieure à cette valeur prédéterminée.

Le dispositif 5' de retardement du remplissage du réservoir auxiliaire au desserrage permet de commander le passage de fluide depuis la conduite 1 vers ledit passage d'alimentation 12, via un passage annulaire 11, en fonction du rapport entre la pression dans ladite conduite 1 et la pression dans ledit passage d'alimentation 12, en aval de l'étranglement 23.

Le passage d'alimentation 12 mène vers la soupape de retenue 6, qui empêche le retour du fluide depuis le réservoir auxiliaire via la conduite 3 vers le passage d'alimentation 12. La soupape de retenue 6 s'ouvre dès que la pression dans le passage d'alimentation 12 dépasse la pression de la conduite 3 d'une très faible surpression (aussi faible que 40 à 60 millibars).

Le distributeur présente en outre un limiteur de surcharge 7 dont la structure est maintenant décrite. Le limiteur de surcharge présente une chambre inférieure 30, et une chambre supérieure 31.

Un équipage de contrôle 32, formant avec une membrane d'étanchéité un piston, sépare en deux parties isolées la chambre inférieure. La partie inférieure de la chambre inférieure 30 est reliée au passage d'alimentation 12. La partie supérieure de la chambre 30 est reliée à la conduite 1. La partie inférieure de la chambre inférieure 30 est reliée au passage d'alimentation 12. L'équipage de contrôle est soumis, dans la partie inférieure de la chambre inférieure 30 à la pression du passage d'alimentation 12, ainsi qu'à la sollicitation d'un ressort 33, qui tendent à le faire remonter. L'équipage de contrôle est soumis, dans la partie supérieure de la chambre inférieure 30 à la pression de la conduite 1. L'équipage de contrôle présente en outre un poussoir qui s'engage dans la chambre supérieure 31, à travers un joint d'étanchéité; ce poussoir est susceptible de repousser en position d'ouverture un clapet central 34, à l'encontre de la sollicitation d'un ressort. L'action du ressort sur le poussoir, via le clapet 34, et l'action de la pression régnant dans la partie supérieure de la chambre inférieure 30 tendent à faire descendre l'équipage de contrôle.

La chambre supérieure 31 du limiteur de surcharge est reliée par une conduite à la partie supérieure de la chambre intermédiaire 15. Elle est aussi reliée par une ouverture 35 au réservoir de commande, via la conduite 2. La chambre supérieure 31 du limiteur de surcharge comprend un clapet anti-retour 36, sollicité vers le bas par un ressort 37. Le clapet anti-retour 36, lorsqu'il est sollicité par le ressort 37, vient s'appuyer sur un siège autour de l'ouverture 35. Le clapet anti-retour 36 présente une ouverture centrale, qui est traversée par le poussoir de l'équipage de contrôle 32 engagé dans la chambre supérieure 31, cette ouverture étant susceptible d'être obturée par le clapet 34 lorsque l'équipage de contrôle descend par rapport au clapet anti-retour 36.

De la sorte, le passage de fluide entre la partie supérieure de la chambre intermédiaire 5 du dispositif de retardement et la conduite 2, via la chambre supérieure 31 du limiteur de surcharge 7, peut présenter plusieurs états. Dans un premier état, le clapet anti-retour 36 est en position basse et obture l'ouverture 35, tandis que l'équipage de contrôle 32 du limiteur de surcharge est aussi en position basse, ce qui permet au clapet 34 d'obturer le passage central du clapet anti-retour 36. Dans ce premier état, le passage de fluide vers la conduite 2 et le réservoir de commande est interrompu.

Dans un deuxième état, le clapet anti-retour 36 est en position basse et obture l'ouverture 35, tandis que l'équipage de contrôle 32 du limiteur de surcharge est en position haute, ce qui ouvre le passage central du clapet anti-retour 36, par levée du clapet 34. Dans ce deuxième état, le passage de fluide se fait via l'ouverture centrale du clapet anti-retour 36.

Dans un troisième état, le clapet anti-retour 36 s'ouvre sous l'effet de la surpression du réservoir de commande et libère l'ouverture 35, tandis que l'équipage de contrôle 32 du limiteur de surcharge est aussi en position haute. Dans ce troisième état, le passage de fluide s'effectue à travers l'ouverture 35, dans le sens de la décharge du réservoir de commande, depuis la conduite 2.

La section de passage de fluide entre la partie supérieure de la chambre intermédiaire 5 du dispositif de retardement et la conduite 2 peut ainsi varier grâce au limiteur de surcharge 7, et être obturée en cas de besoin.

Le fonctionnement du distributeur représenté à la figure est le suivant, en fonction des différentes situations.

### Premier Remplissage.

Lors du premier remplissage, on suppose que toutes les capacités sont vides, et qu'il n'y a aucune pression dans les organes de freinage. On fait alors monter la pression dans la conduite générale, pour charger les capacités.

Du fait qu'il n'y a aucune pression dans les organes de freinage, l'équipage secondaire 17 du dispositif d'isolement du réservoir de commande est en position basse, sous la sollicitation du ressort 19, la pression étant égale dans les deux parties de la chambre supérieure 18.

La pression dans la chambre inférieure 8 du dispositif de retardement est la pression de la conduite générale. La pression dans la partie supérieure de la chambre intermédiaire 15 du dispositif de retardement est sensiblement égale à la pression du réservoir de commande, comme ceci apparaît plus clairement dans l'étude de la situation au niveau du limiteur 7. De la sorte, l'équipage principal, sous l'action du ressort 14, est en position haute; le clapet coulissant 9 est aussi en position haute sous l'action du ressort 10; le passage annulaire 11 est donc obturé.

La pression dans le passage d'alimentation 12 monte et ouvre la soupape de retenue 6, ce qui conduit à charger le réservoir auxiliaire à travers l'étranglement 23.

L'étranglement 20 est ouvert sous l'action du poussoir 24 de l'équipage secondaire, qui agit sur le clapet 22 de l'équipage principal. De la sorte, le passage central de l'équipage principal 13 du dispositif de retardement est ouvert.

Au niveau du limiteur de surcharge, le ressort 33 maintient l'équipage de contrôle 32 en position haute, de sorte que le passage est ouvert de la chambre supérieure 31 vers la conduite 2. Le réservoir de commande est donc chargé, depuis la conduite 1, via la chambre inférieure 8 du dispositif de retardement, le premier étranglement 16, le deuxième étranglement 20, la partie supérieure de la chambre intermédiaire 15 du dispositif de retardement, la chambre supérieure 31 du limiteur de surcharge et la conduite 2.

Le dispositif de l'invention permet donc d'assurer le chargement du réservoir de commande et du réservoir auxiliaire, à la vitesse de montée en pression du réservoir de commande à travers les étranglements successifs 20 et 16.

### Régime permanent.

En régime permanent, les capacités sont chargées, et il n'y a aucune pression dans les organes de freinage. La pression dans la conduite générale varie peu, et les pressions des réservoirs auxiliaire et de commande sont toujours sensiblement égales à la pression de la conduite générale.

Au niveau du dispositif de retardement, l'équipage principal 13 et le clapet mobile 9 sont en position haute sous l'action des ressorts 14 et 10. Le passage 11 est obturé. L'équipage secondaire 17 du dispositif d'isolement du réservoir de commande est en position basse, et le poussoir 24 décolle le clapet 22 de son siège.

Au niveau du limiteur de surcharge, l'équipage de contrôle 32 est en position haute, décollant le clapt 34 de son siège, et le clapet anti-retour 36 est en position basse.

De la sorte, comme ci-dessus, le réservoir de commande est en communication avec la conduite 1, via la chambre inférieure 8 du dispositif de retardement, le premier étranglement 16, le deuxième étranglement 20, la partie supérieure de la chambre intermédiaire 15 du dispositif de retardement, la chambre supérieure 31 du limiteur de surcharge et la conduite 2. Le réservoir de commande suit donc les variations lentes de la pression dans la conduite générale.

### Serrage des freins.

Lors d'un serrage, on suppose que toutes les capacités sont chargées, et qu'il n'y a aucune pression dans les organes de freinage. On fait alors baisser brutalement la pression dans la conduite générale, pour actionner les organes de freinage.

Le dispositif principal du distributeur, non représenté, envoie de l'air sous pression dans les organes de freinage.

Au niveau du dispositif d'isolement du réservoir de commande, la pression de freinage régnant dans la partie inférieure de la chambre supérieure 18 fait remonter l'équipage secondaire 17, à l'encontre de la pression atmosphérique et de la force du ressort 19. Le poussoir 24, qui se dégage du passage 20, laisse donc le clapet 22 obturer le passage central de l'équipage principal 13, sous l'action du ressort 21.

La pression dans la chambre inférieure 8 est la pression de la conduite générale. La pression dans la partie supérieure de la chambre intermédiaire 15 du dispositif de retardement est sensiblement égale à la pression du réservoir de commande, comme ceci apparaît plus clairement dans l'étude de la situation au niveau du limiteur 7. L'équipage principal, du fait de la différence de pression, est en position basse, entraînant vers le bas le clapet coulissant 9 et ouvrant le passage annulaire 11.

La pression dans le passage d'alimentation 12 est sensiblement égale à la pression dans la conduite générale 1. De ce fait, au niveau du limiteur de surcharge, l'équipage de contrôle 32 est en position haute; le clapet anti-retour 36 est en position basse, et l'ouverture centrale du clapet anti-retour 36 est ouverte. Le réservoir de commande reste donc relié à la partie supérieure de la chambre intermédiaire 15 du dispositif de retardement, via la conduite 2 et la chambre supérieure 31 du limiteur de surcharge.

Le dispositif de l'invention est donc transparent au serrage.

### Desserrage.

Lors du desserrage, les réservoirs auxiliaires sont partiellement déchargés, car une partie du fluide comprimé qu'ils contenaient a servi à actionner les organes de freinage. On fait remonter la pression dans la conduite générale; comme expliqué plus haut, pour améliorer la vitesse de desserrage, la pression dans la conduite générale dépasse la pression nominale.

Le dispositif d'isolement au desserrage permet, tant que les organes de freinage restent sous pression, d'empêcher le chargement du réservoir de commande. De fait, tant que les organes de freinage restent sous pression, l'équipage secondaire 17 est en position haute, de sorte que le poussoir 24, remonté, laisse le clapet 22 obturer le passage central de l'équipage principal 13.

Indépendamment du dispositif de retardement 5, le dispositif d'isolement du réservoir de commande 5' permet d'empêcher le passage de fluide depuis la conduite 1 vers le réservoir de commande (conduite 2), tant qu'il subsiste dans les organes de freinage une pression suffisante pour faire remonter l'équipage secondaire 17 .

Par ailleurs, pendant le desserrage, l'équipage principal 13 est en position haute, la pression de la conduite 1 reliée à la conduite générale étant supérieure à la pression dans la partie supérieure de la chambre intermédaire 15 du dispositif de retardement, reliée au réservoir de commande.

Le clapet coulissant 9, entraîné vers le haut, obture le passage annulaire 11, de telle sorte que le fluide provenant de la conduite 1 s'écoule vers le passage d'alimentation 12 par l'étranglement 23.

Comme expliqué plus haut, et notamment dans le cas de trains très longs, il peut être nécessaire de maintenir une pression élevée dans la conduite générale, et ceci même lorsqu'il n'y a plus de pression dans les organes de freinage des premiers wagons, afin que la remontée de pression de la conduite générale atteigne la queue du train et provoque le desserrage des derniers wagons. Dans ce cas, l'invention permet d'éviter toute surcharge du réservoir de commande, et limite aussi le remplissage des réservoirs auxiliaires des premiers wagons du train.

Lorsque la pression dans les organes de freinage diminue, l'équipage secondaire 17 du dispositif d'isolement au desserrage descend, sous l'action du ressort 19. Par ailleurs, l'équipage principal 13 du dispositif de retardement reste en position haute, sous l'action de la pression de la conduite 1 et du ressort 14. Le clapet coulissant 9 reste aussi en position haute, obturant le passage annulaire 11, de sorte que le fluide sous pression ne s'écoule depuis la chambre inférieure 8 vers le passage d'alimentation 12 qu'à travers l'étranglement 23. Le poussoir 24 agit sur le clapet 22 et ouvre le passage central de l'équipage principal 13, au niveau de l'étranglement 20.

Le passage annulaire 11 étant obturé, la chambre inférieure 8 du dispositif de retardement est reliée au passage d'alimentation 12 via l'étranglement 23. La pression dans le passage d'alimentation 12, par hypothèse supérieure à la pression du réservoir auxiliaire en phase de desserrage, ouvre facilement la soupape 6, qui est très sensible. L'écoulement de fluide depuis le passage d'alimentation 12 vers le réservoir auxiliaire fait diminuer la pression dans le passage d'alimentation 12, compte tenu de l'étranglement 23, par rapport à la pression dans la conduite 1.

La situation au limiteur de surcharge 7 est la suivante. Le clapet anti-retour 36 reste en position basse. Du fait de la différence de pression entre la conduite 1 et le passage d'alimentation 12, l'équipage de contrôle 32 du limiteur de surcharge est en position basse, ce qui permet au clapet 34 d'obturer le passage central du clapet anti-retour 36. De la sorte, la conduite 2 menant au réservoir de commande se trouve isolée de la chambre supérieure 31 du limiteur de surcharge et de la partie supérieure de la chambre supérieure 15 du dispositif de retardement.

Ainsi, l'invention permet d'éviter toute surcharge du réservoir de commande, même après la fin du desserrage des organes de freinage, tant qu'il existe un écoulement d'air depuis la conduite générale vers le réservoir auxiliaire.

Le limiteur de surcharge 7 cesse d'isoler le réservoir de commande lorsque la pression du réservoir auxiliaire a quasiment atteint la pression de la conduite générale. A ce moment, la soupape 6 se referme, la pression dans le passage d'alimentation 12 remonte, et l'équipage de contrôle 32 du limiteur de surcharge 7 remonte; le passage central du clapet 36 est ouvert, et le réservoir de commande se trouve chargé depuis la conduite 1, via la chambre inférieure 8 du dispositif de retardement, le premier étranglement 16, le deuxième étranglement 20, la partie supérieure de la chambre intermédiaire 15 du dispositif de retardement, la chambre supérieure 31 du limiteur de surcharge et la conduite 2.

Selon un mode de réalisation de l'invention, la section del'étranglement 23 est susceptible d'être réglée en fonction de la capacité du réservoir auxiliaire. De la sorte, il est possible d'assurer que la charge du réservoir de commande et la charge du réservoir auxiliaire s'effectuent selon des montées en pression quasi-parallèles. Par ailleurs, ceci permet de régler la charge d'un réservoir auxiliaire donné, pour une montée en pression donnée de la conduite générale.

Il convient de noter que la situation au niveau du limiteur de surcharge est uniquement contrôlée par le rapport entre la pression du passage d'alimentation 12 et la pression de la conduite 1. Autrement dit, le fonctionnement du limiteur de surcharge selon l'invention est uniquement lié à la présence de l'étranglement 23 entre la conduite 1 et le passage d'alimentation 12. Le limiteur de surcharge 7 permet de régler le problème de la surcharge du réservoir de commande, après l'ouverture du dispositif d'isolement du réservoir de commande 5', et indépendamment de l'existence du dispositif de retardement du remplissage du réservoir auxiliaire au desserrage. Autrement dit, pendant le desserrage et après sa fin, le dispositif de retardement 5 avec son équipage principal 13 en position haute est transparent pour le fonctionnement du limiteur de surcharge 7 et du dispositif 5' d'isolement du réservoir de commande.

Le dispositif de retardement du remplissage du réservoir auxiliaire au desserrage permet d'assurer un remplissage efficace du réservoir auxiliaire, en début de desserrage. Ainsi, lorsque la pression de la conduite générale commence à remonter, la pression du réservoir de commande, plus importante, maintient l'équipage principal 13 en position basse. De ce fait, le passage annulaire 11 est libéré, et le chargement du réservoir auxiliaire se fait à grand débit, via le passage d'alimentation 12, sans passer par l'étranglement 23. On assure donc un remplissage favorisé du réservoir auxiliaire, au début de la phase de desserrage. Ceci permet notamment de remplir en priorité les réservoirs auxiliaires qui se seraient trop déchargés, par exemple du fait d'une fuite dans les organes de freinage qu'ils alimentent.

### Réduction de surcharge

Le clapet anti-retour 36 permet, dans le cas d'une réduction pilotée de la surcharge, d'assurer une décharge efficace du réservoir de commande. En effet, après un desserrage prolongé avec surpression dans la conduite générale, les réservoirs auxiliaires, puis les réservoirs de commande peuvent avoir été chargés au delà de la pression nominale. Dans ce cas, un mécanisme piloté assure une diminution progressive de la pression de la conduite générale, jusqu'à la pression nominale.

La surpression dans le réservoir de commande conduit à un décollement du clapet 36, ce qui assure une plus grande section pour la décharge. Le réservoir de commande se décharge via l'ouverture 35, la chambre supérieure 31 du limiteur de surcharge, la partie supérieure de la chambre intermédiaire 15 du dispositif de retardement, l'étranglement 20, l'étranglement 16, et la conduite 2. Pendant cette réduction pilotée, l'équipage secondaire 17 du dispositif de retardement est en position basse et agit sur le clapet 22 pour assurer l'ouverture de l'étranglement 20.

L'invention permet ainsi, par la présence de l'étranglement 23 et du limiteur de surcharge, de régler le problème de la surcharge du réservoir de commande, lors du desserrage.

L'ajout du dispositif de retardement du remplissage du réservoir auxiliaire au desserrage permet d'améliorer la charge du réservoir auxiliaire en début de desserrage et de conserver le caractère "d'inépuisabilité" du frein.

On peut choisir, pour l'étranglement 23, une section croissante avec la capacité du réservoir auxiliaire, ou proportionnelle à cette capacité. La section de l'étranglement 23 peut ainsi varier largement car les capacités des réservoirs auxiliaires peuvent varier pratiquement de 20 à 300 litres.

L'homme du métier choisira en fonction de l'expérience et des conditions d'exploitation les différentes valeurs des sections des pistons et des forces de rappel des ressorts, pour mettre en oeuvre l'invention. On rappelle à ce sujet les principales valeurs de pression imposées par l'UIC (Union Internationale des Chemins de Fer), qui sont bien connues de l'homme du métier, et qui permettent de faire passer un véhicule ferroviaire d'un réseau à l'autre sans risquer de problèmes de freinage, que ce soit en plaine ou en montagne:
- pression de régime de la conduite générale: entre 4 et 6 bars;
- dépression produisant la pression de freinage maximale de 3,8 bars : 1,5 bar;
- les durées de desserrage à partir du freinage maximal sont respectivement de 20 secondes en régime voyageur et de 72 secondes en régime marchandises.

Pour renforcer ou prolonger l'intensité et la durée d'actionnement des différents équipages mobiles, il est possible d'interposer des étranglements sur les passages de liaison entre les conduites et les chambres d'actionnement des pistons du limiteur de surcharge selon l'invention.

Bien entendu, la présente invention n'est pas limitée aux modes de réalisation décrits et représentés, et elle est susceptible de nombreuses variantes accessibles à l'homme de l'art sans que l'on ne s'écarte de l'invention telle que définie dans les revendications.

## Revendications

1. Distributeur de freinage à fluide sous pression pour un véhicule ferroviaire, comprenant
- des moyens de liaison (1) à une conduite générale;
- des moyens de liaison (2) à un réservoir de commande;
- des moyens de liaison (3) à un réservoir auxiliaire;
- des moyens de liaison (4) à des organes de freinage;
- un dispositif principal, délivrant une pression de freinage vers les moyens de liaison (4) à des organes de freinage, en fonction de la pression dans les moyens de liaison (1) à une conduite générale,
- un dispositif d'isolement du réservoir de commande (5') commandant le passage de fluide depuis les moyens de liaison (1) à une conduite générale vers les moyens de liaison (2) à un réservoir de commande, ledit dispositif d'isolement du réservoir de commande (5') empêchant le passage du fluide tant que la pression dans les moyens de liaison (4) à des organes de freinage est supérieure à une valeur prédéterminée, et permettant le passage de fluide lorsque la pression dans les moyens de liaison (4) à des organes de freinage est inférieure à cette valeur prédéterminée, caractérisé en ce qu'il comprend
- un passage (12) reliant les moyens de liaison (1) à une conduite générale aux moyens de liaison (3) à un réservoir auxiliaire, ledit passage présentant un étranglement (23), et
- un limiteur de surcharge (7), commandant le passage du fluide depuis ledit dispositif (5') d'isolement du réservoir de commande vers lesdits moyens de liaison (2) à un réservoir de commande, en fonction du rapport entre la pression dans les moyens de liaison (1) à la conduite générale et la pression dans ledit passage (12), entre ledit étranglement (23) et les moyens de liaison (3) au réservoir auxiliaire.

2. Distributeur selon la revendication 1, caractérisé en ce que la section dudit étranglement (23) est susceptible d'être réglée.

3. Distributeur selon la revendication 1 ou 2, caractérisé en ce qu'il comprend en outre un dispositif (5) de retardement du remplissage du réservoir auxiliaire au desserrage, commandant le passage de fluide depuis les moyens de liaison (1) à une conduite générale vers ledit passage (12), via un passage (11), en fonction du rapport entre la pression dans lesdits moyens de liaison (1) à une conduite générale et la pression dans ledit passage (12), entre ledit étranglement (23) et les moyens de liaison (3) au réservoir auxiliaire.

4. Distributeur selon l'une des revendications 1 à 3, caractérisé en ce que ledit limiteur de surcharge (7) présente une chambre inférieure (30) séparées en deux parties isolées par un équipage de contrôle (32), formant piston avec une membrane d'étanchéité et sollicité par un ressort (33), les parties isolées de la chambre inférieure (30) étant respectivement reliées aux moyens de liaison (1) à une conduite générale et au passage (12), entre ledit étranglement (23) et les moyens de liaison (3) au réservoir auxiliaire, et en ce que l'écoulement du fluide entre ledit dispositif (5') d'isolement du réservoir de commande et lesdits moyens de liaison (2) à un réservoir de commande est contrôlé par le déplacement dudit équipage de contrôle (32).

5. Distributeur selon la revendication 4, caractérisé en ce qu'il comprend en outre
- une chambre supérieure (31), reliée d'une part audit dispositif (5') d'isolement du réservoir de commande et d'autre part auxdits moyens de liaison (2) à un réservoir de commande, et
- un clapet (34) susceptible de commander le passage du fluide à travers ladite chambre supérieure (31),
l'équipage de contrôle (32) présentant un poussoir qui s'engage dans la chambre supérieure (31) et qui est susceptible de repousser en position d'ouverture ledit clapet (34), à l'encontre de la sollicitation d'un ressort.

6. Distributeur selon la revendication 5, caractérisé en ce que le siège dudit clapet (34) est prévu dans un clapet anti-retour (36), disposé dans ladite chambre supérieure (31), et susceptible d'augmenter la section du passage depuis les moyens de liaison (2) à un réservoir de commande vers ledit dispositif (5') d'isolement du réservoir de commande, lorsque la pression dans lesdits moyens de liaison (2) à un réservoir de commande est supérieure à la pression régnant dans ladite chambre supérieure (31).

## Patentansprüche

1. Verteiler für unter Druck stehendes Bremsfluid für ein Schienenfahrzeug
- mit Verbindungseinrichtungen (1) zu einer Hauptleitung,
- mit Verbindungseinrichtungen (2) zu einem Steuerbehälter,
- mit Verbindungseinrichtungen (3) zu einem Hilfsbehälter,
- mit Verbindungseinrichtungen (4) zu Bremsorganen,
- mit einer Hauptvorrichtung, die einen Bremsdruck an die Verbindungseinrichtungen (4) zu Bremsorganen abhängig vom Druck in den Verbindungseinrichtungen (1) zu einer Hauptleitung abgibt,
- mit einer Steuerbehälter-Trennvorrichtung (5'), die den Fluiddurchlaß von den Verbindungseinrichtungen (1) zu einer Hauptleitung in Richtung der Verbindungseinrichtungen (2) zu einem Steuerbehälter steuert, wobei die Steuerbehälter-Trennvorrichtung (5') den Fluiddurchlaß verhindert, solange der Druck in den Verbindungseinrichtungen (4) zu Bremsorganen über einem vorgegebenen Wert liegt, und den Fluiddurchlaß erlaubt, wenn der Druck in den Verbindungseinrichtungen (4) zu Bremsorganen unter diesem vorgegebenen Wert liegt,
dadurch gekennzeichnet, daß der Verteiler
- einen Durchgang (12), der die Verbindungseinrichtungen (1) zu einer Hauptleitung mit den Verbindungseinrichtungen (3) zu einem Hilfsbehälter verbindet, wobei der Durchgang mit einer Drossel (23) versehen ist, und
- einen Überladungsbegrenzer (7) aufweist, der den Fluiddurchlaß von der Steuerbehälter-Trennvorrichtung (5') in Richtung der Verbindungseinrichtungen (2) zu einem Steuerbehälter als Funktion des Verhältnisses zwischen dem Druck in den Verbindungseinrichtungen (1) zur Hauptleitung und dem Druck in dem Durchgang (12) zwischen der Drossel (23) und den Verbindungseinrichtungen (3) zum Hilfsbehälter steuert.

2. Verteiler nach Anspruch 1, dadurch gekennzeichnet, daß der Querschnitt der Drossel (23) einstellbar ist.

3. Verteiler nach Anspruch 1 oder 2, dadurch gekennzeichnet, daß er außerdem eine Vorrichtung (5) zum Verzögern des Füllens des Hilfsbehälters beim Lösen der Bremsen umfaßt, die den Fluiddurchlaß von den Verbindungseinrichtungen (1) zu einer Hauptleitung in Richtung des Durchgangs (12) über einen Durchgang (11) als Funktion des Verhältnisses zwischen dem Druck in den Verbindungseinrichtungen (1) zu einer Hauptleitung und dem Druck in dem Durchgang (12) zwischen der Drossel (23) und den Verbindungseinrichtungen (3) zu dem Hilfsbehälter steuert.

4. Verteiler nach einem der Ansprüche 1 bis 3, dadurch gekennzeichnet, daß der Überladungsbegrenzer (7) eine untere Kammer (30) aufweist, die durch ein Steuerelement (32) in zwei abgetrennte Teile getrennt ist, das mit einer Dichtungsmembran einen Kolben bildet und durch eine Feder (33) belastet wird, wobei die abgetrennten Teile der unteren Kammer (30) jeweils mit den Verbindungseinrichtungen (1) zu einer Hauptleitung und mit dem Durchgang (12) zwischen der Drossel (23) und den Verbindungseinrichtungen (3) zum Hilfsbehälter verbunden sind, und daß der Fluidstrom zwischen der Steuerbehälter-Trennvorrichtung (5') und den Verbindungseinrichtungen (2) zu einem Steuerbehälter durch die Verschiebung des Steuerelements (32) gesteuert wird.

5. Verteiler nach Anspruch 4, dadurch gekennzeichnet, daß er außerdem
- eine obere Kammer (31), die einerseits mit der Steuerbehälter-Trennvorrichtung (5') und andererseits mit den Verbindungseinrichtungen (2) zu einem Steuerbehälter verbunden ist, und
- ein Ventil (34) zur Steuerung des Fluiddurchlasses durch die obere Kammer (31) aufweist,
- wobei das Steuerelement (32) einen Stößel aufweist, der in die obere Kammer (31) eingreift und der in der Lage ist, das Ventil (34) gegen die Belastung einer Feder in die Öffnungsposition zurückzudrücken.

6. Verteiler nach Anspruch 5, dadurch gekennzeichnet, daß der Sitz des Ventils (34) in einem Rückschlagventil (36) vorgesehen ist, das in der oberen Kammer (31) angeordnet ist und das in der Lage ist, den Durchlaßquerschnitt von den Verbindungseinrichtungen (2) zu einem Steuerbehälter in Richtung der Steuerbehälter-Trennvorrichtung (5') zu vergrößern, wenn der Druck in den Verbindungseinrichtungen (2) zu einem Steuerbehälter größer ist als der Druck, der in der oberen Kammer (31) vorherrscht.

## Claims

1. Pressurised braking fluid distributor for a railway vehicle, comprising:
- means (1) providing a connection to a brake pipe;
- means (2) providing a connection to a control reservoir;
- means (3) providing a connection to an auxiliary reservoir:
- means (4) providing a connection to braking members;
- a main device, supplying a braking pressure to means (4) connected to the braking members, as a function of the pressure in the means (1) providing a connection to a brake pipe.
- a device providing isolation from the control reservoir (5') controlling the passage of fluid from said means (1) providing a connection to a brake pipe to said means (2) providing a connection to a control reservoir, said device providing isolation from the control reservoir (5') preventing passage of fluid as long as the pressure in said means (4) providing a connection to said braking members is greater than a predetermined value, and allowing passage of fluid when the pressure in said means (4) providing a connection to the braking members is less than said predetermined value, characterised in that it comprises:
- a passage (12) linking said means (1) providing a connection to a brake pipe, to said means (3) providing a connection to an auxiliary reservoir, the said passage having a restriction (23), and
- an overload limiter (7), controlling the passage of fluid from said device (5') providing isolation from said control reservoir to said means (2) providing a connection to a control reservoir, as a function of the ratio between the pressure in said means (1) providing a connection to the brake pipe and the pressure in said passage (12), between said restriction (23) and said means (3) providing the connection to said auxiliary reservoir.

2. The distributor according to claim 1, characterised in that the cross section of said restriction (23) is able to be adjusted.

3. The distributor according to claim I or 2, characterised in that it additionally comprises a device (5) for delaying the filling of the auxiliary reservoir during brake release, controlling the passage of fluid from said means (1) providing a connection to a brake pipe to said passage (12), via a passage (11), as a function of the ratio between the pressure in said means (1) providing a connection to a brake pipe and the pressure in said passage (12), between said restriction (23) and said means (3) providing a connection to said auxiliary reservoir.

4. The distributor according to one of claims 1-3, characterised in that said overload limiter (7) has an inner chamber (30) separated into two parts isolated by a control assembly (32), forming a piston with a sealing membrane and loaded by a spring (33), the isolated portions of the lower chamber (30) being respectively connected to said means (1) providing a connection to a brake pipe and to said passage (12), between said restriction (23) and said means (3) providing a connection to said auxiliary reservoir, and in that the flow of fluid between said device (5') for isolating said control reservoir and said means (2) providing a connection to a control reservoir is controlled by displacement of the said control assembly (32).

5. The distributor according to claim 4, characterised in that it further comprises:
- an upper chamber (31), linked, firstly, to said device (5') for isolating said control reservoir and, secondly, to said means (2) providing a connection to said control reservoir, and
- a valve plate (34) for controlling the passage of fluid through said upper chamber (31).
said control assembly (32) having a pushrod engaging into said upper chamber (31) and which is adapted to urge said plate valve (34) back to an open position. against the action of a spring.

6. The distributor according to claim 5, characterised in that the seat of said plate valve (34) is provided in a non-return valve (36). arranged in said upper chamber (31), and adapted to increase the cross section for passage from said means (2) providing a connection to the control reservoir to said device (5') for isolating said control reservoir, when the pressure in said means (2) providing a connection to a control reservoir is greater than the pressure prevailing in the said upper chamber (31).
